# EUROPÄISCHE PATENTANMELDUNG

(11) **EP 2 237 121 A1**
(43) Veröffentlichungstag der Anmeldung: **06.10.2010**
(21) Anmeldenummer: 09004557.6
(22) Anmeldetag: 30.03.2009
(51) Int. Cl.: G05B 19/409, G06F 3/033

(54) **Bediengerät und Verfahren für eine industrielle Automatisierungsanordnung**

(71) Anmelder: Siemens Aktiengesellschaft, 80333 München (DE)
(72) Erfinder: Bandigowda, Anandkumar Chalapuradudi, 560058 Bangalore (IN)

(57) **Zusammenfassung**

Die Erfindung betrifft ein Verfahren und ein Bediengerät (BG) für eine industrielle Automatisierungsanordnung, mit einer zugeordneten berührungsempfindlichen Anzeigevorrichtung (TP), wobei die Anzeigevorrichtung (TP) zur Umsetzung von Benutzereingaben in Meldungen und Übertragung der Meldungen an eine Anwendung des Bediengerätes (BG) eingerichtet ist. Dabei ist der Anzeigevorrichtung (TP) ein Bedienmittel (BM) zugeordnet, wobei das Bedienmittel (BM) zur drahtlosen Aussendung eines Authentifizierungscodes und das Bediengerät (BG) zum Empfang des Authentifizierungscodes eingerichtet sind. Das Bediengerät (BG) ist zum Vergleich empfangener Authentifizierungscodes mit zumindest einem gespeicherten Referenz-Authentifizierungscode eingerichtet, wobei das Bediengerät (BG) derart eingerichtet ist, dass durch Benutzereingaben erzeugte Meldungen nur in den Fällen an die Anwendung übertragen werden, in denen der Vergleich positiv ausfällt.

## Beschreibung

### Beschreibung

Bediengerät und Verfahren für ein Bediengerät für eine industrielle Automatisierungsanordnung

Die Erfindung betrifft ein Bediengerät für eine industrielle Automatisierungsanordnung gemäß dem Oberbegriff des Patentanspruchs 1, und ein Verfahren für ein Bediengerät einer industriellen Automatisierungsanordnung gemäß dem Oberbegriff des Patentanspruchs 8.

Computer und andere technische Einrichtungen werden häufig mittels grafischer Benutzeroberflächen (GUI- graphical user interface) bedient, bei denen ein Benutzer interaktiv auf einem Bildschirm oder einer ähnlichen Anzeigevorrichtung Bedienelemente oder andere Eingabevorrichtungen betätigt, die durch ein Anwendungsprogramm gesteuert dargestellt werden. Während im Umfeld von Büro-Anwendungen und bei anderen "klassischen" Applikationen die Eingaben meist mittels einer Tastatur und einer Computer-Mouse oder einem Track-Pad oder einer ähnlichen Einrichtung vorgenommen werden, werden in vielen Anwendungsbereichen inzwischen vermehrt berührungsempfindliche Anzeigevorrichtungen (Bildschirme), sog. Touchscreens, eingesetzt. Dies betrifft vor allem die Bediengeräte für industrielle Automatisierungsanordnungen, die häufig in einem industriellen Umfeld maschinennah eingesetzt werden, wobei der Einsatz von Tastaturen, Computer-Mäusen etc. oft unpraktisch oder wegen widriger Umweltbedingungen aufwändig ist.

Der Einsatz berührungsempfindlicher Bildschirme für Bediengeräte in einer industriellen Umgebung ist aber auch mit Nachteilen verbunden. So werden solche Bediengeräte und deren Anzeigevorrichtungen (Bildschirme) oft an räumlich engen Stellen eingesetzt, wobei es dann zu ungewollten, zufälligen Bedienungen bzw. Fehl-Bedienungen kommen kann, indem ein Mitarbeiter mittels seiner Kleidung oder anderer Gegenstände zufällig den berührungsempfindlichen Bildschirm berührt und damit ungewollt eine Eingabe vornimmt. Um solche ungewollten Bedienungen zu vermeiden, können die berührungsempfindlichen Anzeigevorrichtungen mittels eines separaten Schalters gesperrt werden, so dass während einer Sperrung ("Lock") keine wirksamen Eingaben gemacht werden können. Die Sperrung bzw. Ent-Sperrung der Benutzeroberfläche mittels eines Schalters wird jedoch oft als lästig empfunden.

Ein weiteres Problem im Zusammenhang mit den Bediengeräten für industrielle Automatisierungsanordnungen besteht darin, dass unautorisierte Eingaben, also Eingaben von nicht berechtigten Personen, wirksam verhindert werden sollen. Zu diesem Zweck ist es üblich, dass das Anwendungsprogramm des Bediengerätes, welches über die graphische Benuteroberfläche der berührungsempfindlichen Anzeigevorrichtung gesteuert werden soll, vor einer Bedienung mittels einer Passworteingabe o.ä. freigeschaltet wird. Diese Freischaltung dauert dann so lange an, bis mittels einer weiteren Eingabe oder mittels eines Befehls die Sperrung wieder aktiviert wird. Alternativ kann die Sperrung auch automatisch aktiviert werden, beispielsweise in den Fällen, in denen für eine gewisse Zeit keine weitere Eingabe erfolgt ist. Neben dem Nachteil, dass eine solche manuelle Ent-Sperrung der Benutzeroberfläche von Benutzern häufig als lästig empfunden wird und spontane Eingaben unmöglich macht, kann mit einem solchen Verfahren die Benutzeroberfläche erst dann abgesichert werden, wenn die Software-Funktion, die die Sperrung bzw. Ent-Sperrung betätigt, in den Arbeitsspeicher des Bediengerätes geladen und aktiviert worden ist. Dies bedeutet, dass zwischen dem Einschalten des Bediengerätes bzw. der berührungsempfindlichen Anzeigevorrichtung und dem Aktivieren der Software, die die Sicherungsfunktion ausübt, die Eingaben an der berührungsempfindlichen Anzeigevorrichtung nicht abgesichert sind. In diesem Zeitraum können also ungewünschte manipulative Eingaben gemacht werden.

Es ist also eine Aufgabe der vorliegenden Erfindung, unabsichtliche oder unautorisierte Eingaben an Bediengeräten für industrielle Automatisierungsanordnungen zu verhindern.

Erfindungsgemäß wird dazu vorgeschlagen, für die Bedienung der berührungsempfindlichen Anzeigevorrichtung ein spezielles Bedienmittel, beispielsweise in Form eines Stiftes ("pencil", "stylus"), vorzusehen, wobei dieses Bedienmittel vor oder während der Bedienung bzw. Berührung der Anzeigevorrichtung einen Authentifizierungscode aussendet, der von einem Empfänger des Bediengerätes oder der Anzeigevorrichtung empfangen und ausgewertet wird, wobei nur dann Eingaben verarbeitet werden, wenn ein gültiger Authentifizierungscode empfangen wird bzw. wurde. Dabei macht man sich zu Nutze, dass ohnehin üblicher Weise berührungsempfindliche Anzeigevorrichtungen mittels Bedienstiften (oft in Form eines Kugelschreibers o.ä., aber ohne Abgabe von Farbe) eingesetzt werden, weil damit präzisere Eingaben möglich sind.

Die Lösung der Aufgabe sieht insbesondere ein Bediengerät für eine industrielle Automatisierungsanordnung vor, mit einer zugeordneten berührungsempfindlichen Anzeigevorrichtung, wobei die Anzeigevorrichtung zur Umsetzung von Benutzereingaben in Meldungen und Übertragung der Meldungen an eine Anwendung des Bediengerätes eingerichtet ist. Dabei ist der Anzeigevorrichtung ein Bedienmittel zugeordnet, wobei das Bedienmittel zur drahtlosen Aussendung eines Authentifizierungscodes und das Bediengerät zum Empfang des Authentifizierungscodes eingerichtet sind. Das Bediengerät ist dabei zum Vergleich empfangener Authentifizierungscodes mit zumindest einem gespeicherten Referenz-Authentifizierungscode eingerichtet, wobei das Bediengerät derart eingerichtet ist, dass durch Benutzereingaben erzeugte Meldungen nur in den Fällen an die Anwendung übertragen oder von der Anwendung verarbeitet werden, in denen der Vergleich positiv ausfällt. Ein solches Bediengerät ist zuverlässig sowohl vor zufälligen Eingaben im Zusammenhang mit unbeabsichtigten Berührungen als auch vor böswilligen Eingaben solcher Personen geschützt, die nicht über das passende, zugeordnete Bedienmittel verfügen.

Die Lösung der Aufgabe sieht außerdem ein Verfahren für ein Bediengerät einer industriellen Automatisierungsanordnung vor, wobei Eingaben an dem Bediengerät in Meldungen umgesetzt und diese Meldungen an eine Anwendung des Bediengerätes übertragen werden, Dabei nimmt in einem ersten Schritt ein Benutzer mit einem Bedienmittel eine Eingabe an einer berührungsempfindlichen Anzeigevorrichtung des Bediengerätes vor, wobei durch das Bedienmittel ein Authentifizierungscode an das Bediengerät übermittelt wird. In einem zweiten Schritt wird die Position der Eingabe in eine Meldung umgesetzt, wonach in einem dritten Schritt der Authentifizierungscode von dem Bediengerät empfangen und mit einem in dem Bediengerät gespeicherten Referenz-Authentifizierungscode verglichen wird. Schließlich wird in einem vierten Schritt im Fall eines positiven Ergebnisses des Vergleichs die Meldung an die Anwendung übermittelt. Durch die Anwendung dieses Verfahrens werden böswillige Eingaben und zufällige Fehleingaben an Bediengeräten für industrielle Automatisierungsanordnungen zuverlässig verhindert.

Vorteilhafte Ausgestaltungen des erfindungsgemäßen Bediengerätes sind in den abhängigen Patentansprüchen angegeben. Die dabei verwendeten Merkmale und Vorteile gelten sinngemäß auch für das erfindungsgemäße Verfahren.

Dabei kann die Wiederholrate für die Übertragungen des Authentifizierungscodes eingeschränkt werden, indem das Bediengerät derart eingerichtet ist, dass nach einem positiven Vergleich die Übertragung der Meldungen für eine vordefinierte Zeitspanne freigegeben ist.

Das Bedienmittel kann aber auch zur Übertragung des Authentifizierungscodes bei jeder Betätigung der berührungsempfindlichen Anzeigevorrichtung eingerichtet sein. Dadurch wird eine besonders hohe Sicherheit erreicht, weil damit jede einzelne Eingabe abgesichert wird und somit kein "Zeitfenster" vorgesehen werden muss, während dessen auch unautorisierte Eingaben möglich sind. Außerdem werden dabei nur dann Authentifizierungscodes gesendet, wenn tatsächlich Eingaben gemacht werden, so dass in der Zwischenzeit ein böswilliges "Abhören" unnötig übertragener Authentifizierungscodes nicht möglich ist.

Eine erhöhte Sicherheit ergibt sich, wenn das Bedienmittel zur Erfassung biometrischer Daten eines Benutzers und Übermittlung dieser biometrischen Daten oder eines aus diesen biometrischen Daten erzeugten Datensatzes als der Authentifizierungscode oder zumindest als ein Teil des Authentifizierungscodes eingerichtet ist. Damit ist sichergestellt, dass tatsächlich eine berechtigte Person die Eingabe vornimmt, und nicht etwa eine unberechtigte Person, die zufällig oder böswillig in den Besitz des Bedienmittels gelangt ist. Beispielsweise kann in das Bedienmittel ein Lesegerät zur Erfassung eines Fingerabdruck-Musters der Bedienperson integriert sein. Dabei kann der Vergleich des erfassten Fingerabdruck-Musters mit einem Referenzmuster bzw. mit Referenzwerten entweder in dem Bedienmittel selbst erfolgen, oder aber im Bediengerät. Im letzteren Fall ist es möglich, für den Vergleich die Referenzdaten aus einer zentralen Datenbank auszulesen, so dass von einer zentralen Stelle aus die Zugangsberechtigung für das Bediengerät administriert werden kann. Bei einem Vergleich im Bedienmittel kann die Aussendung des Authentifizierungscodes vom positiven Vergleich abhängig gemacht werden.

Eine zuverlässige Übertragung des Authentifizierungscodes kann erfolgen, wenn das Bedienmittel einen RFID-Transponder zur Aussendung des Authentifizierungscodes aufweist und das Bediengerät mit einer RFID-Antenne und mit einem RFID-Empfänger zum Empfang des Authentifizierungscodes ausgestattet ist; eine eigene Stromversorgung des Bedienmittels kann dann entfallen. Alternativ kann die Übertragung des Authentifizierungscodes aber auch mittels der Aussendung modulierten infraroten Lichtes erfolgen, wobei in diesem Fall das Bediengerät mit einer Empfangseinrichtung für eine Datenübertragung mittels dieses infraroten Lichtes ausgestattet ist. Diese Technik kommt vorteilhaft in den Fällen zur Anwendung, in denen elektromagnetische Störungen die zuverlässige Übertragung mittels Funk stören. Die Verwendung infraroten Lichtes zur Datenübertragung bietet sich insbesondere in den Fällen an, in denen als die berührungsempfindliche Anzeigevorrichtung ein sog. "optischer Touchscreen" verwendet wird, bei dem die Lokalisierung des Eingabepunktes ebenfalls auf der Aussendung und der Detektion von infrarotem Licht basiert. In diesem Fall können die Sensoren für das infrarote Licht, die für die Lokalisierung des Betätigungspunktes verwendet werden, vorteilhaft auch für den Empfang desjenigen modulierten infraroten Lichtes verwendet werden, welches von dem Bedienmittel zur Übertragung des Authentifizierungscodes ausgesendet wird.

Ausführungsbeispiele des erfindungsgemäßen Bediengerätes werden nachfolgend anhand der Zeichnungen erläutert. Sie dienen gleichzeitig der Erläuterung eines Ausführungsbeispiels für das erfindungsgemäße Verfahren.

Dabei zeigen:
- Figur 1: in einer seitlichen Ansicht die schematische Dar- stellung eines Bediengerätes mit einer berührungs- empfindlichen Anzeigevorrichtung und mit einem Be- dienmittel, und
- Figur 2: ein Ablaufdiagramm zur Veranschaulichung.des erfin- dungsgemäßen Verfahrens.

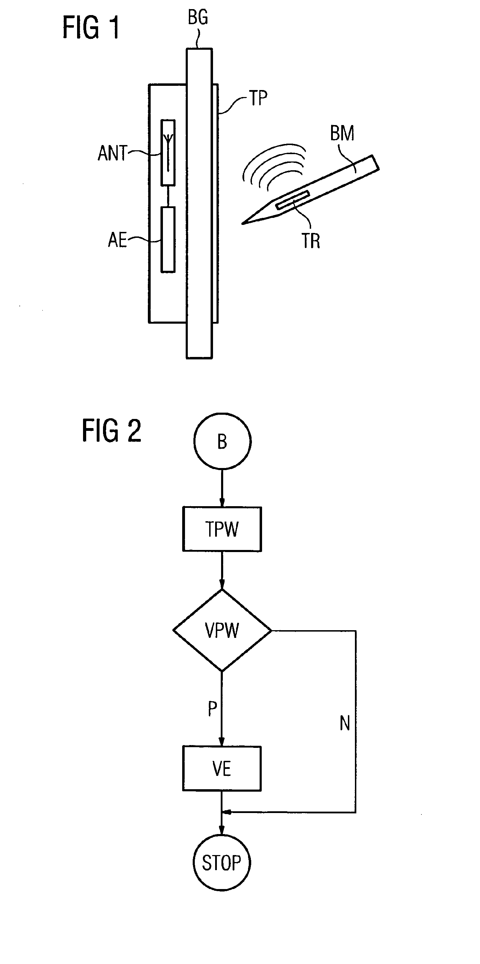

In der Figur 1 ist in einer schematischen, seitlichen Darstellung ein Bediengerät BG einer industriellen Automatisierungsanordnung dargestellt, welches mit einer berührungsempfindlichen Anzeigevorrichtung TP ("Touch Panel") ausgerüstet ist. Das Bediengerät ist weiterhin mit einer Antenne ANT und einer Auswerteeinheit AE ausgerüstet, wobei die Auswerteeinheit AE derart mit der Antenne ANT verbunden ist, dass per Funk übertragene Daten von der Antenne ANT empfangen und von der Auswerteinheit AE verarbeitet werden können.

Weiterhin ist in der Figur 1 als Bedienmittel BM ein Stift etwa in Bauform eines Kugelschreibers o.ä. dargestellt, wobei das Bedienmittel BM mit einem Transponder TR ausgestattet ist. Der Transponder TR ist ein RFID-Transponder (RFID = Radio Frequency Identification), wobei ein solcher Transponder mittels einer Aussendung eines RFID-Empfängers mit elektromagnetischer Energie versorgt und aktiviert wird, wobei der Transponder als Antwort auf die Aktivierung eine funkbasierte Datenübertragung zu dem Empfänger vornimmt. Im vorliegenden Ausführungsbeispiel bildet die Antenne ANT und die Auswerteeinheit AE den zum Bedienmittel BM passenden RFID-Empfänger.

Alternativ zu der beschriebenen Datenübertragung mittels RFID-Funktechnik können das Bedienmittel BM und die Auswerteeinheit AE auch mittels anderer Technologien Daten austauschen, insbesondere mittels Infrarot-Datenübertragung.

Für die Bedienung der (nicht dargestellten) industriellen Automatisierungsanordnung ist vorgesehen, dass ein Anwender mittels des Bedienmittels BM Eingaben auf einer grafischen Benutzeroberfläche vornimmt, die durch die berührungsempfindliche Anzeigevorrichtung TP dargestellt wird. Diese Eingaben, die aus Berührungen des Bedienmittels BM an vordefinierten Stellen (Koordinaten) der berührungsempfindlichen Anzeigevorrichtung TP bestehen, werden durch die Auswerteeinheit AE des Bediengerätes BG in Bediendatensätze umgewandelt, welche im Wesentlichen die Koordinaten (X, Y) des jeweils berührten Punktes umfassen. Diese Datensätze mit den Koordinaten werden an eine Anwendung (Application Layer), welche in der Figur 1 nicht dargestellt ist, des Bediengerätes BG oder außerhalb des Bediengerätes BG übertragen, wo diese anhand der jeweiligen Struktur der graphischen Benutzeroberfläche in Anweisungen, Befehle etc. umgesetzt werden.

Im Folgenden wird anhand der Figur 2 das Verfahren beschrieben, mit dem das Bediengerät BG in die Lage versetzt wird, zwischen autorisierten und nicht-autorisierten Eingaben zu unterscheiden. Dazu ist in der Figur 2 ein Ablaufdiagramm dargestellt, welches im Wesentlichen in vertikaler Richtung von oben nach unten durchlaufen wird.

In einem ersten Schritt B ("Beginn") berührt ein Benutzer mit dem Bedienmittel BM eine beliebige Stelle der berührungsempfindlichen Anzeigevorrichtung TP. Dadurch wird in der Auswerteeinheit AE ein Ereignis, ein sog. "Interrupt", ausgelöst, welcher dazu führt, dass über die Antenne ANT eine Reihe von elektromagnetischen Impulsen ausgesendet wird. Diese Impulse dienen der Aktivierung des Transponders TR des Bedienmittels BM. Gleichzeitig werden in der Auswerteinheit AE die Koordinaten gespeichert, die den berührten Punkt auf der berührungsempfindlichen Anzeigevorrichtung TP beschreiben. Durch die Impulse wird der Transponder TR aktiviert und zur Aussendung eines Datensatzes mit einem Authentifizierungscodes angeregt. Dieser Authentifizierungscode ist im vorliegenden, einfachen Ausführungsbeispiel eine feststehende Zahlenkombination, die identisch auch in der Auswerteeinheit AE als Referenz-Authentifizierungscode gespeichert ist.

In vorteilhaften Ausgestaltungen kann jedoch auch mit jeder Aussendung ein nach einem bestimmten Schema geänderter Authentifizierungscode ausgesendet werden; man spricht dabei auch von "rollenden" Codes. In einem solchen Fall muss selbstverständlich das Schema der Änderungen auch in der Auswerteinheit AE hinterlegt sein. In einem weiteren, vorteilhaften Ausführungsbeispiel umfasst das Bedienmittel BM einen Sensor zur Erfassung biometrischer Merkmale der Bedienperson, also des Anwenders. Dies kann beispielsweise ein Scanner zum Einlesen eines Fingerabdruck-Musters sein. Aus den biometrischen Daten werden dann Merkmale extrahiert, die ebenfalls in der Auswerteeinheit AE hinterlegt sein müssen und somit, zumindest teilweise, den Authentifizierungscode darstellen. In einer weiteren vorteilhaften Abwandlung der Variante mit dem biometrischen Merkmalen ist es möglich, dass die biometrischen Referenz-Daten nicht in der Auswerteeinheit AE, sondern in dem Bedienmittel DM selbst gespeichert sind, wobei in dem Bedienmittel BM der später beschriebene Vergleich zwischen Authentifizierungscode und den Referenzdaten (hier: Referenz-Authentifizierungscode) vorgenommen wird. Auch eine Kombination der vorteilhaften Ausgestaltungen ist natürlich möglich.

Der von dem Bedienmittel BM auszusendende Authentifizierungscode wird also in einem Bedienschritt TPW ("Transfer Passwort") an die Auswerteeinheit AE übermittelt und in einem nächsten Bedienschritt VPW ("Vergleich des Passworts") mit den dort hinterlegten Referenzdaten verglichen. Dabei wird davon ausgegangen, dass nur ein autorisierter Anwender im Besitz eines Bedienmittels BM mit einem passenden Authentifizierungscode sein kann. Dies kann ggf. mittels der als optional beschriebenen biometrischen Abfrage gesichert werden. In den Fällen, in denen der Vergleich des übermittelten Authentifizierungscodes mit den gespeicherten Referenz-Daten negativ ist (Verzweigung N in der Figur 2), wird die mittels des Bedienmittels eingegebene Eingabe, also der Datensatz mit den Koordinaten, verworfen. Im Fall eines positiven Vergleichs (Verzweigung P in der Figur 2) wird der Datensatz mit den gespeicherten Koordinaten in einem nächsten Verarbeitungsschritt VE ("Verarbeitung der Eingabe") ausgewertet, indem der Datensatz an die Anwendung übertragen und dort in eine Anweisung o.ä. umgesetzt wird. Damit ist das Verfahren für den vorliegenden Bedienvorgang abgeschlossen.

Alternativ oder zusätzlich zu der hier beschriebenen Vorgehensweise, bei der bei jeder Berührung der berührungsempfindlichen Anzeigevorrichtung TP eine Übertragung des Authentifizierungscodes angefordert wird, kann auch nach einer erfolgreichen Authentifizierung die Verarbeitung von Eingaben (Berührungen) für eine vordefinierte Zeit freigeschaltet sein, beispielsweise für 10 Sekunden. In einer weiteren Alternative kann das Bedienmittel BM auch derart ausgestaltet sein, dass es eine Taste umfasst, wobei ein Abruf des Authentifizierungscodes nur dann geschehen kann, wenn diese Taste gedrückt ist. Damit kann verhindert werden, dass böswillig mittels eines zweiten RFID-Empfängers versucht wird, unbemerkt in den Besitz des Authentifizierungscodes zu gelangen.

Alternativ kann auch in einer Bedienspitze des Bedienmittels BM ein Sensor, Schalter oder dergleichen integriert sein, der eine Übermittlung des Authentifizierungscodes auslöst oder zumindest freigibt; dies bietet sich vorteilhaft besonders im Ausführungsbeispiel der infraroten Datenübertragung an, weil diese einen Energiespeicher (z.B. Akku) im Bedienmittel BM vorsieht.

Vorteilhaft ist aus Sicherheitsgründen die Auswerteeinheit AE fest in der Hardware des Bediengerätes BG oder der berührungsempfindlichen Anzeigevorrichtung TP integriert, beispielsweise als kundenspezifischer integrierter Schaltkreis.

Neben der reinen Absicherung von Eingaben kann das derartige Bediengerät BG auch zur Programmierung oder Änderung des im Bedienmittel BM gespeicherten Authentifizierungscodes verwendet werden.

## Patentansprüche

1. Bediengerät (BG) für eine industrielle Automatisierungsanordnung,
mit einer zugeordneten berührungsempfindlichen Anzeigevorrichtung (TP),
wobei die Anzeigevorrichtung (TP) zur Umsetzung von Benutzereingaben in Meldungen und Übertragung der Meldungen an eine Anwendung des Bediengerätes (BG) eingerichtet ist,
**dadurch gekennzeichnet,**
**dass** der Anzeigevorrichtung (TP) ein Bedienmittel (BM) zugeordnet ist,
wobei das Bedienmittel (BM) zur drahtlosen Aussendung eines Authentifizierungscodes und das Bediengerät (BG) zum Empfang des Authentifizierungscodes eingerichtet sind, und
**dass** das Bediengerät (BG) zum Vergleich empfangener Authentifizierungscodes mit zumindest einem gespeicherten Referenz-Authentifizierungscode eingerichtet ist,
wobei das Bediengerät (BG) derart eingerichtet ist, dass durch Benutzereingaben erzeugte Meldungen nur in den Fällen an die Anwendung übertragen werden, in denen der Vergleich positiv ausfällt.

2. Bediengerät (BG) nach Patentanspruch 1,
**dadurch gekennzeichnet,**
**dass** das Bediengerät (BG) derart eingerichtet ist, dass nach einem positiven Vergleich die Übertragung der Meldungen für eine vordefinierte Zeitspanne freigegeben ist.

3. Bediengerät (BG) nach einem der vorhergehenden Patentansprüche,
**dadurch gekennzeichnet,**
**dass** das Bedienmittel (BM) zur Übertragung des Authentifizierungscodes bei jeder Betätigung der berührungsempfindlichen Anzeigevorrichtung (TP) eingerichtet ist.

4. Bediengerät (BG) nach einem der vorhergehenden Patentansprüche,
**dadurch gekennzeichnet,**
**dass** das Bedienmittel (BM) zur Erfassung biometrischer Daten eines Benutzers und Übermittlung dieser biometrischen Daten oder eines aus diesen biometrischen Daten erzeugten Datensatzes als der Authentifizierungscode oder als ein Teil des Authentifizierungscodes eingerichtet ist.

5. Bediengerät (BG) nach einem der vorhergehenden Patentansprüche, **dadurch gekennzeichnet,**
**dass** das Bedienmittel (BM) einen RFID-Transponder (TR) zur Aussendung des Authentifizierungscodes aufweist und das Bediengerät (BG) mit einer RFID-Antenne und mit einem RFID-Empfänger (ANT, AE) zum Empfang des Authentifizierungscodes ausgestattet ist.

6. Bediengerät (BG) nach einem der Patentansprüche 1 bis 4, **dadurch gekennzeichnet,**
**dass** das Bedienmittel (BM) zur Übertragung des Authentifizierungscodes mittels der Aussendung modulierten infraroten Lichts ausgebildet ist, und
**dass** das Bediengerät (BG) mit einer Empfangseinrichtung für eine Datenübertragung mittels infraroten Lichtes ausgestattet ist.

7. Bediengerät (BG) nach Patentanspruch 6,
**dadurch gekennzeichnet,**
**dass** die berührungsempfindliche Anzeigevorrichtung (TP) ein optischer Touchscreen mit einer auf der Aussendung und der Detektion von infrarotem Licht basierenden Lokalisierung eines Betätigungspunktes ist, wobei die für die Lokalisierung des Betätigungspunktes vorgesehenen Detektionsmittel für das infrarote Licht auch für den Empfang des Authentifizierungscodes vorgesehen sind.

8. Verfahren für ein Bediengerät (BG) einer industriellen Automatisierungsanordnung,
wobei Eingaben an dem Bediengerät (BG) in Meldungen umgesetzt und diese Meldungen an eine Anwendung des Bediengerätes (BG) übertragen werden,
**dadurch gekennzeichnet, dass**
- in einem ersten Schritt ein Benutzer mit einem Bedienmittel (BM) eine Eingabe an einer berührungsempfindlichen Anzeigevorrichtung (TP) des Bediengerätes (BG) vornimmt, wobei durch das Bedienmittel (BM) ein Authentifizierungscode an das Bediengerät (BG) übermittelt wird,
- in einem zweiten Schritt die Position der Eingabe in eine Meldung umgesetzt wird,
- in einem dritten Schritt der Authentifizierungscode von dem Bediengerät (BG) empfangen und mit einem in dem Bediengerät (BG) gespeicherten Referenz-Authentifizierungscode verglichen wird, und
- in einem vierten Schritt im Fall eines positiven Ergebnisses des Vergleichs die Meldung an die Anwendung übermittelt wird.
